# FASCICULE DE BREVET EUROPEEN

(11) **EP 1 259 088 B1**
(45) Date de publication et mention de la délivrance du brevet: **20.09.2006**
(21) Numéro de dépôt: 02291134.1
(22) Date de dépôt: 06.05.2002
(51) Int. Cl.: H04Q 7/32

(54) **Procédé de notification de l'arrivée d'un événement sur un terminal mobile, et terminal mobile pour la mise en oeuvre de ce procédé**
Verfahren zur Meldung des Eingangs eines Ereignis zu einem Mobilgerät, und Mobilgerät für diese Verfahren
Method for notifying the arrival of an event to a mobile terminal, and mobile terminal for this method

(30) Priorité: 14.05.2001 FR 0106304
(43) Date de publication de la demande: 20.11.2002
(73) Titulaire: TCL & ALCATEL MOBILE PHONES LIMITED, China Hong Kong City, 33 Canton Road, Tsim Sha Tsui,Kowloon, Hong Kong (CN)
(72) Inventeur: Valade, Eric, 72190 Sarge Les, Le Mans (FR); Bonnard, Pierre, 92150 Suresnes (FR)
(74) Mandataire: Feray, Valérie

(56) Documents cités:
- WO-A-00/33468
- DE-A- 19 749 730
- US-A- 6 061 570

## Description

La présente invention concerne un procédé de notification d'événements reçus par un terminal mobile à un autre terminal relié à ce terminal mobile, ainsi qu'un terminal mobile pour la mise en oeuvre de ce procédé.

Il peut arriver que l'utilisateur d'un terminal mobile, et notamment d'un téléphone mobile, n'ait pas accès facilement à ce dernier, par exemple lorsqu'il se trouve dans un bagage ou un sac et qu'il n'est pas aisément à portée de main, ou parce que l'utilisateur est en réunion, ou encore parce que, du fait du bruit environnant, l'utilisateur n'entend pas la sonnerie de son téléphone. Il se peut encore que l'utilisateur ait oublié son téléphone mobile.

Dans ce cas, pour ce qui est des communications téléphoniques, il existe en général une messagerie vocale permettant à l'utilisateur de consulter les communications qu'il n'a pu recevoir directement. L'arrivée d'une communication téléphonique enregistrée sur la messagerie vocale, est notifiée à l'utilisateur au moyen d'un message qui s'affiche alors sur son téléphone mobile, de sorte que lorsqu'il a de nouveau accès à ce dernier, l'utilisateur est informé de l'arrivée d'un message.

A l'heure actuelle, les téléphones mobiles ne sont pas seulement destinés à recevoir des communications téléphoniques. Il peuvent en outre recevoir des communications transmettant des fichiers ou des fax, nécessitant la connexion du terminal mobile à un terminal de traitement de données. Les terminaux mobiles peuvent aussi recevoir des messages de type texte, son ou image (notamment par le protocole SMS, ou Short Message Service).

Tous ces messages sont notifiés à l'utilisateur sur son téléphone mobile, de sorte que l'utilisateur sait qu'il peut télécharger ou consulter les données reçues, comme par exemple des e-mails, des appels non décrochés, des données multimédia, etc...

Tous ces messages, de quelque type qu'ils soient, seront désignés par le terme général « événement » dans tout ce qui suit.

Les solutions de notification existant à l'heure actuelle ne sont cependant pas satisfaisantes. En effet, l'utilisateur n'a pas le choix de la manière avec laquelle l'arrivée d'un événement lui est notifiée. Cela ne peut être que sur son téléphone mobile, qui n'est pas nécessairement accessible aisément.

Un autre example se trouve dans le document WO 0033468 (BITTACHON HOLDING, INC) 8-6-2000

La présente invention a donc pour but de mettre au point un procédé de notification de l'arrivée d'un événement sur un terminal mobile de type téléphone mobile, qui soit plus flexible que les procédés connus.

La présente invention propose à cet effet un procédé de notification de l'arrivée d'un événement dit entrant sur un terminal mobile relié par des moyens de communication à au moins un autre terminal dit terminal à notifier,
**caractérisé en ce qu'**il comprend les opérations suivantes lors de l'arrivée sur ledit terminal mobile d'un événement entrant identifié par un type d'événement entrant:
- comparaison du type dudit événement entrant avec l'identifiant d'un type d'événement entrant contenu dans un profil de gestion d'événements entrants préalablement activé
- si le type dudit événement entrant correspond à un type d'événement entrant dudit profil de gestion activé, envoi d'un message de notification audit terminal à notifier dont l'identifiant est contenu dans ledit profil de gestion activé.

Grâce au procédé selon l'invention, l'utilisateur d'un téléphone mobile en tant que terminal mobile du procédé de l'invention peut ainsi définir ses propres profils lui permettant de gérer les événements entrants sur son téléphone mobile notamment lorsqu'il n'a pas accès à ce dernier. Ces profils contiennent au moins deux paramètres que sont un identifiant de type d'événement entrant (communication, e-mail, SMS, etc...) et un identifiant de terminal à notifier (ordinateur personnel, assistant de données personnel ou PDA, etc...). Selon le type de l'événement entrant, le profil peut spécifier que le message de notification soit envoyé sur un terminal à notifier prédéterminé ou plusieurs.

Ainsi, par exemple, lorsque l'utilisateur se trouve en réunion et utilise son ordinateur portable, il peut préciser dans son profil de gestion que tous les événements entrants sur son téléphone mobile lui soient notifiés par un message apparaissant à l'écran de son ordinateur portable, ou que seulement les événements entrants du type message électronique (e-mails) soient ainsi notifiés.

Le procédé selon l'invention est donc bien plus flexible et offre beaucoup plus de possibilités que ceux de l'art antérieur pour permettre à l'utilisateur d'un téléphone mobile d'orienter les événements entrants où et quand il le souhaite.

Selon un mode de réalisation avantageux, le procédé selon l'invention comprend une phase d'initialisation comportant les opérations suivantes :
- mise en mémoire d'au moins un profil de gestion d'événements entrants, ledit profil contenant au moins un identifiant de type d'événement entrant et un identifiant de terminal à notifier
- activation d'au moins un profil de gestion, dit profil de gestion activé, pour indiquer que lesdits événements entrants doivent être traités selon ledit profil de gestion activé.

Ainsi, l'utilisateur peut « programmer » sont téléphone mobile pour qu'il applique le profil de gestion de son choix.

Les événements entrants gérés dans les profils de gestion du procédé selon l'invention peuvent être de tout type connu susceptible d'arriver sur un téléphone mobile ; ces événements peuvent être notamment des communications téléphoniques, des télécopies, des messages de type SMS, des messages électroniques ou e-mails, etc...

Grâce à l'invention, on peut notifier l'arrivée d'un événement sur un terminal mobile à tout type de terminal relié à ce dernier par une interface radio, et notamment à un ordinateur personnel, un assistant de données personnel, un autre terminal mobile, un casque d'écoute, une montre, etc.... Plus généralement, on peut notifier l'arrivée d'un événement à tout type de terminal susceptible de communiquer avec le téléphone mobile et d'émettre une notification à l'attention de l'utilisateur sous forme de message sonore, vibratoire, visuel, etc...

De manière très avantageuse, les moyens de communication entre le terminal mobile et le terminal à notifier comprennent une interface radio. Dans ce cas, le message de notification peut être transmis selon le protocole Bluetooth. Le protocole Bluetooth, décrit par exemple dans le document « Bluetooth - The universal interface for ad hoc, wireless connectivity » publié dans Ericsson Review, N°3, 1998, Ericsson, Stockholm, pages 110 à 117, est une interface universelle dans le bande de fréquences située autour de 2,45 GHz qui permet à des dispositifs électroniques portables de se connecter et de communiquer « sans fil » grâce à des réseaux courte-distance adaptés. Le protocole Bluetooth est donc particulièrement adapté à la transmission des messages de notification selon le procédé de l'invention.

Selon un mode de réalisation de l'invention, les profils de gestion peuvent contenir en outre un identifiant dit de contexte d'activité, de sorte que, pour l'application du profil de gestion activé, on effectue une opération de comparaison de l'identifiant de contexte d'activité à un contexte d'activité de l'événement entrant.

Selon ce mode de réalisation, le procédé de l'invention peut comprendre une phase d'initialisation comportant la mise en mémoire d'une information de contexte d'activité global destinée à être associée à tout événement entrant.

Ainsi l'utilisateur, avant de partir en réunion, configure son téléphone mobile selon le contexte d'activité « réunion» ; le profil de gestion activé prévoit alors par exemple que dans ce cas que les événements entrants sont notifiés sur l'ordinateur portable de l'utilisateur. L'utilisateur peut aussi configurer son téléphone mobile selon le contexte d'activité « téléphone mobile inaccessible » ; le profil de gestion activé prévoit alors par exemple que dans ce cas, les événements entrants sont notifiés sur la montre de l'utilisateur.

L'arrivée d'un événement entrant sur le terminal mobile peut être en outre notifiée directement sur le terminal mobile, en complément de la notification sur le ou les terminal(aux) à notifier prévu(s) dans le profil de gestion activé.

Selon un autre aspect de l'invention, une opération de filtrage des événements entrants est effectuée préalablement à la comparaison des types d'événements entrants, de manière à n'appliquer le profil de gestion activé qu'aux événements filtrés.

Dans ce cas, le procédé peut comprendre une phase d'initialisation comportant la mise en mémoire d'un critère de filtrage des événements entrants.

Les profils de gestion peuvent être mis en mémoire au sein du terminal mobile ou au sein d'une unité fixe d'un réseau de radiocommunication auquel appartient le terminal mobile.

Enfin, l'activation du profil de gestion activé peut être effectuée à partir du terminal mobile, donc très facilement par l'utilisateur.

L'invention concerne également un téléphone mobile constituant le terminal mobile pour la mise en oeuvre du procédé précédent.

D'autres caractéristiques et avantages de la présente invention apparaîtront dans la description suivante d'un mode de réalisation de l'invention, donnée à titre illustratif et nullement limitatif.

Dans les figures suivantes :
- la figure 1 illustre de manière schématique un terminal mobile du type téléphone mobile pour la mise en oeuvre du procédé selon l'invention
- la figure 2 montre un bloc-diagramme du procédé selon l'invention

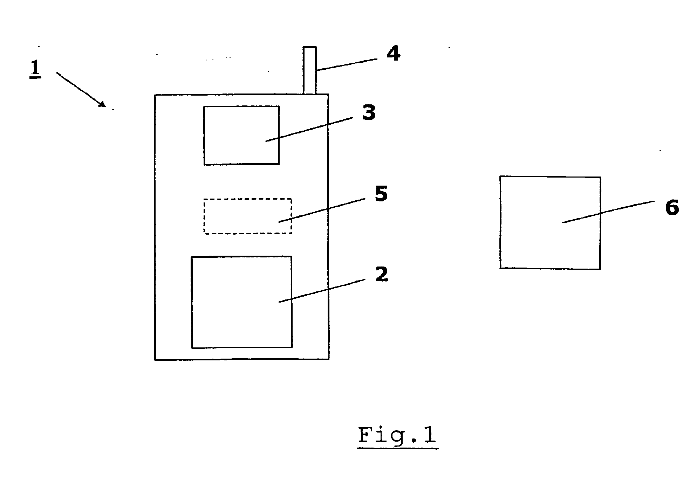

La figure 1 montre un téléphone mobile 1, permettant la mise en oeuvre du procédé selon l'invention. Il comprend :
- un clavier 2 pour saisir des données ou composer des numéros de téléphone,
- un écran 3 pour afficher, de manière classique, des messages, les numéros de téléphone composés, des menus de personnalisation, etc...
- une antenne 4 pour émettre et recevoir des signaux radio
- une mémoire 5 (qui se trouve soit au sein de la carte Subscriber Identity Module SIM, soit au sein du terminal 1 lui-même).

On voit également sur la figure 1 un terminal à notifier, ici un ordinateur personnel 6.

Selon l'invention, une pluralité de profils de gestion d'événements entrants peuvent être mis en mémoire au sein de la mémoire 5 par l'utilisateur du téléphone mobile 1. Les données correspondantes sont saisies par l'utilisateur au moyen du clavier 2.

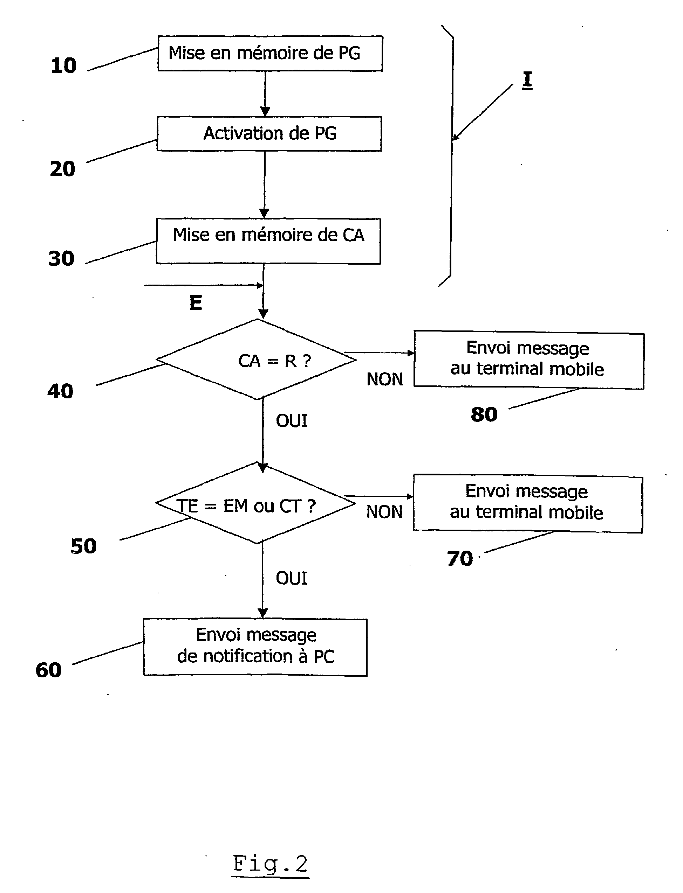

On va maintenant décrire en relation avec la figure 2 comment le procédé de l'invention peut être mis en oeuvre pour notifier l'arrivée d'un événement entrant sur le téléphone mobile 1. A cet effet, un profil de gestion d'événements entrants défini par l'utilisateur de ce terminal mobile 1 va être décrit de manière simplifiée.

De manière générale, selon l'invention, les profils de gestion contiennent au moins un identifiant de type d'événement entrant et un identifiant de terminal à notifier. Ils peuvent contenir en outre un identifiant de contexte d'activité.

L'identifiant du terminal à notifier peut être par exemple l'identification unique d'un module de communication, tel que son adresse Bluetooth.

Dans le profil de gestion pris comme exemple, l'utilisateur choisit par exemple que, dans le contexte d'activité « réunion », l'arrivée de tout événement entrant de type message électronique (e-mail) ou communication téléphonique doit être notifiée sur l'ordinateur personnel 6. Ainsi, le profil de gestion PG contient :
- deux identifiants de type d'événement entrant, EM pour le type e-mail et CT pour le type communication téléphonique,
- un identifiant de terminal à notifier PC (pour le terminal à notifier ordinateur personnel)
- un identifiant de contexte d'activité R (pour le contexte d'activité réunion).

Le procédé selon l'invention débute par une phase initialisation I. Cette phase d'initialisation comporte tout d'abord une étape 10 de mise en mémoire, au sein de la mémoire 5, par l'utilisateur, du profil de gestion PG défini par les identifiants EM, CT, PC et R décrits ci-dessus.

Cette opération de mise en mémoire peut être effectuée une fois pour toutes et indépendamment des autres opérations du procédé selon l'invention. L'utilisateur peut également à son gré modifier le ou les profils de gestion ainsi enregistrés ou en créer de nouveaux lorsqu'il le souhaite ou en a besoin.

Lorsque l'utilisateur souhaite que les événements entrants soient notifiés selon un profil de gestion donné, par exemple selon le profil de gestion PG, il active ce dernier, par l'intermédiaire du clavier 2, sur son téléphone mobile 1. L'étape d'activation 20 ne suit donc pas nécessairement immédiatement celle de mise en mémoire 10. Après cette étape 20, le profil de gestion PG est dit activé.

L'utilisateur doit ensuite également indiquer au téléphone mobile 1 dans quel contexte d'activité il se trouve, par exemple en activant le contexte d'activité dit actuel CA dans la mémoire 5. Ceci est fait au cours d'une opération 30 de mise en mémoire du contexte d'activité CA.

Dans le présent exemple, lorsque le contexte d'activité CA est activé par l'utilisateur dans le téléphone mobile 1, le procédé selon l'invention se déroule comme suit.

Lorsqu'un événement entrant E arrive sur le téléphone mobile 1, ce dernier, par l'intermédiaire par exemple de son microprocesseur (non représenté) compare (étape de comparaison 40 en figure 2) le contexte d'activité actuel CA à l'identifiant de contexte d'activité R du profil PG.

Si CA et R sont identiques, le microprocesseur compare alors (étape de comparaison 50 en figure 2) le type TE de l'événement entrant aux identifiants de types d'événements du profil PG.

Si TE est égal à EM ou CT, un message 60 de notification d'arrivée d'un événement entrant est envoyé à l'ordinateur personnel 6 par l'intermédiaire de l'antenne 4, c'est-à-dire par voie radio, au moyen par exemple du protocole Bluetooth.

Si TE est différent de EM et de CT, alors l'arrivée de l'événement E est notifiée par un message 70 directement sur le téléphone mobile 1, par exemple par déclenchement de la sonnerie ou du vibreur de ce dernier (lorsqu'il en possède un), ou par affichage d'un message sur l'écran 3 du téléphone mobile 1.

Si CA et R sont différents, les événements entrants sont notifiés par un message 80 directement sur le téléphone mobile 1, comme indiqué ci-dessus.

Le procédé selon l'invention n'est pas limité au mode de réalisation et à l'exemple qui viennent d'être décrits.

Notamment, les profils de gestion utilisés selon l'invention peuvent être variés.

Par ailleurs, l'envoi du message de notification peut être fonction d'une priorité prédéfinie par l'utilisateur entre terminaux à notifier, ou de critères d'accessibilité de ces terminaux.

Enfin, on pourra remplacer tout moyen par un moyen équivalent sans sortir de l'invention.

## Revendications

1. Procédé de notification de l'arrivée d'un événement dit entrant (E) sur un terminal mobile (1) relié par des moyens de communication à au moins un terminal distinct dudit terminal mobile et dit terminal à notifier (6),
**caractérisé en ce qu'il** comprend les opérations suivantes lors de l'arrivée sur ledit terminal mobile (1) d'un événement entrant (E) identifié par un type d'événement entrant (TE) :
• comparaison (50) du type dudit événement entrant (TE) avec l'identifiant d'un type d'événement entrant contenu dans un profil de gestion d'événements entrants (PG) préalablement activé
• si le type dudit événement entrant (TE) correspond à un type d'événement entrant dudit profil de gestion activé (PG), envoi d'un message de notification (60) audit terminal à notifier (PC) dont l'identifiant est contenu dans ledit profil de gestion activé (PG).

2. Procédé selon la revendication 1 **caractérisé en ce qu**'il comprend une phase d'initialisation (I) comportant les opérations suivantes :
• mise en mémoire (10) d'au moins un profil de gestion d'événements entrants (PG), ledit profil contenant au moins un identifiant de type d'événement entrant et un identifiant de terminal à notifier
• activation (20) d'au moins un profil de gestion, dit profil de gestion activé (PG), pour indiquer que lesdits événements entrants doivent être traités selon ledit profil de gestion activé (PG).

3. Procédé selon l'une des revendications 1 ou 2 **caractérisé en ce que** ledit événement entrant (E) est choisi parmi la réception d'une communication téléphonique, d'une télécopie, d'un message de type SMS, des messages électroniques ou e-mails.

4. Procédé selon l'une des revendications 1 à 3 **caractérisé en ce que** le ou lesdits terminaux à notifier (6) sont choisis parmi un ordinateur personnel, un assistant de données personnel, un autre terminal mobile, un casque d'écoute et une montre.

5. Procédé selon l'une des revendications 1 à 4 **caractérisé en ce que** lesdits moyens de communication comprennent une interface radio.

6. Procédé selon la revendication 5 **caractérisé en ce que** ledit message de notification est transmis selon le protocole Bluetooth.

7. Procédé selon l'une des revendications 1 à 6 **caractérisé en ce que** ledit profil de gestion activé (PG) contient en outre un identifiant dit de contexte d'activité (CA), de sorte que, pour l'application dudit profil de gestion activé (PG), on effectue opération de comparaison (40) dudit identifiant de contexte d'activité (CA) à un contexte d'activité dudit événement entrant.

8. Procédé selon la revendication 7 **caractérisé en ce qu'**il comprend une phase d'initialisation comportant la mise en mémoire (30) d'une information de contexte activité global (CA) destinée à être associée à tout événement entrant.

9. Procédé selon l'une des revendications 1 à 8 **caractérisé en ce que** l'arrivée d'un événement entrant sur ledit terminal mobile est en outre notifiée directement sur ledit terminal mobile.

10. Procédé selon l'une des revendications 1 à 9 **caractérisé en ce qu**'une opération de filtrage desdits événements entrants est effectuée préalablement à ladite comparaison (50) de types d'événements entrants, de manière à n'appliquer ledit profil de gestion activé (PG) qu'aux événements filtrés.

11. Procédé selon la revendication 10 **caractérisé en ce qu**'il comprend une phase d'initialisation comportant la mise en mémoire d'un critère de filtrage desdits événements entrants.

12. Procédé selon l'une des revendications 1 à 11 **caractérisé en ce que** lesdits profils de gestion sont mis en mémoire au sein dudit terminal mobile (1).

13. Procédé selon l'une des revendications 1 à 11 **caractérisé en ce que** lesdits profits de gestion sont mis en mémoire au sein d'une unité fixe d'un réseau de radiocommunication auquel appartient ledit terminal mobile.

14. Procédé selon l'une des revendications 1 à 13 **caractérisé en ce que** l'activation dudit profil de gestion activé est effectuée à partir dudit terminal mobile (1).

15. Téléphone mobile **caractérisé en ce qu**'il constitue un terminal mobile pour la mise en oeuvre du procédé selon l'une des revendications 1 à 14.

## Claims

1. A method for notifying the arrival of a so-called incoming event (E) on a mobile terminal (1) connected via communications means to at least one terminal distinct from said mobile terminal, the so-called terminal to be notified (6),
**characterized in that** it comprises the following operations upon the arrival on said mobile terminal (1) of an incoming event (E) identified by an incoming event type (TE):
• comparing (50) the type of said incoming event (TE) with the identifier of an incoming event type contained in a handling profile of incoming events (PG) activated beforehand
• if the type of said incoming event (TE) corresponds to an incoming event type of said activated handling profile (PG), sending a notification message (60) to said terminal to be notified (PC), the identifier of which is contained in said activated handling profile (PG).

2. The method according to claim 1, **characterized in that** it comprises an initialization phase (I) including the following operations:
• storing in memory (10) at least one handling profile of incoming events (PG), said profiles containing at least one identifier of the incoming event type and one identifier of the terminal to be notified
• activating (20) at least one handling profile, the so-called activated handling profile (PG), to indicate that said incoming events should be processed according to said activated handling profile (PG).

3. The method according to any of claims 1 or 2, **characterized in that** said incoming event (E) is selected from receiving a telephone call, a fax, an SMS type message, electronic messages or e-mails.

4. The method according to any of claims 1 to 3, **characterized in that** said terminal (s) to be notified (6) are selected from a personal computer, a personal data assistant, another mobile terminal, a headphone and a watch.

5. The method according to any of claims 1 to 4, **characterized in that** said communications means comprise a radio interface.

6. The method according to claim 5, **characterized in that** said notification message is transmitted according to the Bluetooth protocol.

7. The method according to any of claims 1 to 6, **characterized in that** said activated handling profile (PG) further contains a so-called activity context (CA) identifier, so that for applying said activated handling profile (PG), an operation is performed for comparing (40) said activity context (CA) identifier with an activity context of said incoming event.

8. The method according to claim 7, **characterized in that** it comprises an initialization phase including the storage in memory (30) of global activity context (CA) information intended to be associated with any incoming event.

9. The method according to any of claims 1 to 8, **characterized in that** the arrival of an incoming event on said mobile terminal is further notified directly on said mobile terminal.

10. The method according to any of claims 1 to 9, **characterized in that** an operation for filtering said incoming events is performed prior to said comparison (50) of types of incoming events, so as to only apply said activated handling profile (PG) to filtered events.

11. The method according to claim 10, **characterized in that** it comprises an initialization phase including the storage in memory of a criterion for filtering said incoming events.

12. The method according to any of claims 1 to 11, **characterized in that** said handling profiles are stored in memory within said mobile terminal (1).

13. The method according to any of claims 1 to 11, **characterized in that** said handling profiles are stored in memory within a fixed unit of a radiocommunications network to which belongs said mobile terminal.

14. The method according to any of claims 1 to 13, **characterized in that** the activation of said activated handling profile is performed from said mobile terminal (1).

15. A mobile telephone **characterized in that** it forms a mobile terminal for applying the method according to any of claims 1 to 14.

## Patentansprüche

1. Verfahren zum Melden der Ankunft eines sogenannten ankommenden Ereignisses (E) bei einem mobilen Endgerät (1), das über Kommunikationsmittel mit wenigstens einem Endgerät verbunden ist, das von dem mobilen Endgerät verschieden ist und zu benachrichtigendes Endgerät (6) genannt wird, **dadurch gekennzeichnet, dass** es bei der Ankunft eines durch den Typ (TE) des ankommenden Ereignisses identifizierten ankommenden Ereignisses (E) bei dem mobilen Endgerät (1) die folgenden Operationen umfasst:
- Vergleichen (50) des Typs (TE) des ankommenden Ereignisses mit der Kennung eines Typs eines ankommenden Ereignisses in einem vorher aktivierten Profil (PG) für die Steuerung ankommender Ereignisse,
- falls der Typ (TE) des ankommenden Ereignisses einem Typ eines ankommenden Ereignisses des aktivierten Steuerungsprofils (PG) entspricht, Schicken einer Meldenachricht (60) an das zu benachrichtigende Endgerät (PC), dessen Kennung in dem aktivierten Steuerungsprofil (PG) enthalten ist.

2. Verfahren nach Anspruch 1, **dadurch gekennzeichnet, dass** es eine Initialisierungsphase (I) umfasst, die die folgenden Operationen umfasst:
- Ablegen im Speicher (10) wenigstens eines Profils (PG) für die Steuerung ankommender Ereignisse, wobei das Profil wenigstens eine Kennung des Typs ankommender Ereignisse und eine Kennung des zu benachrichtigenden Endgeräts enthält,
- Aktivieren (20) wenigstens eines Steuerungsprofils, das aktiviertes Steuerungsprofil (PG) genannt wird, um anzugeben, dass die ankommenden Ereignisse gemäß dem aktivierten Steuerungsprofil (PG) verarbeitet werden sollen.

3. Verfahren nach einem der Ansprüche 1 oder 2, **dadurch gekennzeichnet, dass** das ankommende Ereignis (E) aus dem Empfang einer Telephonkommunikation, eines Telefaxes, einer Nachricht des Typs (SMS) und von elektronischen Nachrichten oder Emails ausgewählt wird.

4. Verfahren nach einem der Ansprüche 1 bis 3, **dadurch gekennzeichnet, dass** das oder die zu benachrichtigenden Endgeräte (6) aus einem Personalcomputer, einem persönlichen digitalen Assistenten, einem anderen mobilen Endgerät, einem Kopfhörer und einer Uhr gewählt werden.

5. Verfahren nach einem der Ansprüche 1 bis 4, **dadurch gekennzeichnet, dass** die Kommunikationsmittel eine Funkschnittstelle umfassen.

6. Verfahren nach Anspruch 5, **dadurch gekennzeichnet, dass** die Meldenachricht gemäß dem Bluetooth-Protokoll gesendet wird.

7. Verfahren nach einem der Ansprüche 1 bis 6, **dadurch gekennzeichnet, dass** das aktivierte Steuerungsprofil (PG) außerdem eine sogenannte Aktivitätskontext-Kennung (CA-Kennung) enthält, derart, dass für die Anwendung des aktivierten Steuerungsprofils (PG) eine Operation des Vergleichens (40) der Aktivitätskontext-Kennung (CA-Kennung) mit einem Aktivitätskontext des ankommenden Ereignisses ausgeführt wird.

8. Verfahren nach Anspruch 7, **dadurch gekennzeichnet, dass** es eine Initialisierungsphase umfasst, die das Ablegen im Speicher (30) von Informationen über den globalen Aktivitätskontext (CA), die jedem ankommenden Ereignis zugeordnet werden sollen, umfasst.

9. Verfahren nach einem der Ansprüche 1 bis 8, **dadurch gekennzeichnet, dass** die Ankunft eines ankommenden Ereignisses bei dem mobilen Endgerät außerdem direkt dem mobilen Endgerät gemeldet wird.

10. Verfahren nach einem der Ansprüche 1 bis 9, **dadurch gekennzeichnet, dass** eine Operation des Filterns der ankommenden Ereignisse vor dem Vergleich (50) der Typen ankommender Ereignisse ausgeführt wird, derart, dass das aktivierte Steuerungsprofil (PG) nur auf gefilterte Ereignisse angewendet wird.

11. Verfahren nach Anspruch 10, **dadurch gekennzeichnet, dass** es eine Initialisierungsphase umfasst, die das Ablegen im Speicher eines Kriteriums für die Filterung der ankommenden Ereignisse enthält.

12. Verfahren nach einem der Ansprüche 1 bis 11, **dadurch gekennzeichnet, dass** die Steuerungsprofile im Speicher in dem mobilen Endgerät (1) abgelegt werden.

13. Verfahren nach einem der Ansprüche 1 bis 11, **dadurch gekennzeichnet, dass** die Steuerungsprofile im Speicher in einer festen Einheit eines Funkkommunikationsnetzes, zu dem das mobile Endgerät gehört, abgelegt werden.

14. Verfahren nach einem der Ansprüche 1 bis 13, **dadurch gekennzeichnet, dass** die Aktivierung des aktivierten Steuerungsprofils ausgehend von dem mobilen Endgerät (1) ausgeführt wird.

15. Mobiltelephon, **dadurch gekennzeichnet, dass** es aus einem mobilen Endgerät für die Ausführung des Verfahrens nach einem der Ansprüche 1 bis 14 gebildet ist.
